# EUROPÄISCHE PATENTANMELDUNG

(11) **EP 2 626 789 A2**
(43) Veröffentlichungstag der Anmeldung: **14.08.2013**
(21) Anmeldenummer: 13000634.9
(22) Anmeldetag: 07.02.2013
(51) Int. Cl.: G06F 11/20, H04L 12/24

(54) **Alternative Synchronisationsverbindungen zwischen redundanten Steuerungseinrichtungen**

(30) Priorität: 10.02.2012 DE 102012002494
(71) Anmelder: Phoenix Contact GmbH & Co. KG, 32825 Blomberg (DE)
(72) Erfinder: Uhde, Thorsten, 31785 Hameln (DE); Hollmann, Sascha, 32657 Lemgo (DE); Brand, Andre, 32825 Blomberg (DE); Heutger, Henning, 31812 Bad Pyrmont (DE)
(74) Vertreter: Bill, Burkart Hartmut

(57) **Zusammenfassung**

Die Erfindung betrifft ein redundantes Steuerungssystem umfassend ein Automatisierungsnetzwerk (1) mit einer ersten Steuerungseinrichtung (10) und einer zweiten Steuerungseinrichtung (20). Die erste und die zweite Steuerungseinrichtung (10, 20) sind jeweils über eine Netzwerkschnittstelle (11, 21) zum Datenaustausch mit dem Automatisierungsnetzwerk (1) verbunden. Die erste und zweite Steuerungseinrichtung (10, 20) sind für eine direkte Kommunikation untereinander über eine Punkt-zu-Punkt Verbindungseinrichtung (2) miteinander verbunden. Die erste und die zweite Steuerungseinrichtung (10, 20) sind ferner dazu ausgebildet, untereinander eine alternative Kommunikation über das Automatisierungsnetzwerk (1) aufzubauen, sofern die direkte Kommunikation über die Punkt-zu-Punkt Verbindungseinrichtung (2) nicht verfügbar ist. Die Erfindung betrifft ferner ein Verfahren zum Bereiben eines solchen redundanten Steuerungssystems.

## Beschreibung

Die vorliegende Erfindung betrifft ein redundantes Steuerungssystem umfassend ein Automatisierungsnetzwerk mit einer ersten und einer zweiten Steuerungseinrichtung. Ferner betrifft die Erfindung ein Verfahren zum Betreiben eines redundanten Steuerungssystems.

Bei Anwendungen in der Automatisierungstechnik, die zum Beispiel aus Sicherheitsgründen eine hohe Verfügbarkeit erfordern, werden redundant aufgebaute Steuerungssysteme verwendet, die eine erste Steuerungseinrichtung und wenigstens eine zweite Steuerungseinrichtung umfassen. Dabei steuert die erste Steuerungseinrichtung den Prozess, während die zweite Steuerungseinrichtung im Reservebetrieb (Standby) läuft, um zum Beispiel bei einem Ausfall der ersten Steuerungseinrichtung die Kontrolle über den jeweiligen Prozess übernehmen zu können.

Der Programmablauf wird dabei zwischen den zwei redundanten Steuerungseinrichtung über eine Synchronisationsverbindung abgeglichen, damit der Prozess nach einer Übernahme durch die zweite Steuerungseinrichtung kontinuierlich fortgeführt werden kann. Um den konsistenten Betrieb in dem redundanten Steuerungssystem sicher zu stellen, werden neben den Daten der Prozessabbilder weitere Informationen ausgetauscht, so dass jede Steuerungseinrichtung über die Funktionsfähigkeit der anderen Steuerungseinrichtung informiert ist. Für diese Synchronisation wird in der Regel über entsprechende Schnittstellen eine Punkt-zu-Punkt-Verbindung zwischen zwei redundanten Steuerungen aufgebaut, die über eine eigene Datenleitung, beispielsweise in Form von Lichtwellenleitern erfolgt.

Problematisch bei derartigen hochverfügbaren redundanten Steuerungssystemen ist, dass die Steuerungseinrichtungen einen Ausfall der Synchronisationsverbindung nicht von einem Ausfall der jeweils andern Steuerungseinrichtung unterscheiden können, da beide dieser Ausfallmöglichkeiten gleichermaßen die Folge haben, dass die Informationen über die Funktionsfähigkeit nicht weiter ausgetauscht werden.

Die für den Reservebetrieb vorgesehene zweite Steuerungseinrichtung könnte in Folge eines Ausfalls der Synchronisationsverbindung auf einen Ausfall der ersten Steuerungseinrichtung schließen und selbsttätig die aktive Kontrolle des zu steuernden Prozesses übernehmen, obwohl die erste Steuerungseinrichtung gleichermaßen weiterhin aktiv ist. Beide Steuerungseinrichtungen könnten versuchen den Prozess gleichzeitig zu steuern, wobei die nicht mehr synchronisierten Prozessabbilder schnell zu inkonsistenten Zuständen führen. Um einen konsistenten Betrieb in einem redundanten Steuerungssystem sicherzustellen, ist es also erforderlich, eine, z.B. als Doppelmasterschaft bezeichnete, gleichzeitige Kontrolle zweier Steuerungseinrichtung zu vermeiden.

Die vorliegende Erfindung hat sich die Aufgabe gestellt, eine Lösung aufzuzeigen, mit der das oben genannte Problem der Doppelmasterschaft vermieden wird.

Die Aufgabe wird durch ein redundantes Steuerungssystem gemäß den Merkmalen des unabhängigen Anspruchs gelöst. In den Unteransprüchen sind vorteilhafte Weiterbildungen des redundanten Steuerungssystem angegeben.

Ein redundantes Steuerungssystem umfasst demgemäß ein Automatisierungsnetzwerk mit einer ersten und einer zweiten Steuerungseinrichtung. Unter einem Automatisierungsnetzwerk ist beispielsweise ein PROFINET Netzwerk zu verstehen, an dem neben den Steuerungseinrichtungen eine Anzahl von dezentralen Ein- und Ausgabegeräten angeschlossen sein können, über die eine Anlage bzw. ein Prozess kontrolliert und gesteuert werden kann.

Die erste und die zweite Steuerungseinrichtung sind jeweils über eine Netzwerkschnittstelle zum Datenaustausch mit dem Automatisierungsnetzwerk verbunden. Ferner sind die erste und zweite Steuerungseinrichtung für eine direkte Kommunikation untereinander über eine Punkt-zu-Punkt Verbindungseinrichtung miteinander verbunden.

Als Verbindungseinrichtung kann eine Leitungsverbindung verstanden werden, die zum Beispiel als Lichtwellenleiter ausgeführt sein kann. Die Leitungsverbindung kann als Voll-Duplex-Verbindung ausgebildet sein.

Erfindungsgemäß ist vorgesehen, dass die erste und die zweite Steuerungseinrichtung dazu ausgebildet sind, untereinander eine alternative Kommunikation über das Automatisierungsnetzwerk aufzubauen, sofern die direkte Kommunikation über die Punkt-zu-Punkt Verbindungseinrichtung nicht verfügbar ist.

Die vorliegende Erfindung ermöglicht somit eine redundante Punkt-zu-Punkt Kommunikation, ohne dass eine zusätzliche Verbindungseinrichtung zwischen den beiden redundanten Steuerungseinrichtungen notwendig ist.

Die alternative Kommunikation kann in einer besonders vorteilhaften Ausführung der Erfindung zumindest eine teilweise Synchronisation zwischen der ersten und der zweiten Steuerungseinrichtung umfassen. Die Synchronisierung der Prozessabbilder in den beiden redundanten Steuerungen kann zumindest mit eingeschränkter Übertragungsbandbreite über das Automatisierungsnetzwerk aufrechterhalten werden.

Die erste oder die zweite Steuerungseinrichtung kann als Primärsteuerung ausgewählt sein, wobei die andere Steuerungseinrichtung als Reservesteuerung ausgewählt ist.

Die erste und die zweite Steuerungseinrichtung sind vorzugsweise dazu ausgebildet, die Auswahl als Primärsteuerung und als Reservesteuerung selbständig untereinander auszuhandeln.

Vorzugsweise ist die Reservesteuerung dazu ausgebildet, die direkte Kommunikation mit der Primärsteuerung zyklisch zu überprüfen. Diese zyklische Überprüfung kann sowohl bei einer über die Punkt-zu-Punkt Verbindungseinrichtung etablierten Kommunikation, als auch beim alternativen Kommunikationsweg über das Automatisierungsnetzwerk erfolgen.

Die Reservesteuerung kann besonders vorteilhaft auch dazu ausgebildet sein, die Aufgaben der Primärsteuerung zu übernehmen, nach dem die alternative Kommunikation über das Automatisierungsnetzwerk ausgefallen ist.

Die Aufgabe der Erfindung wird ferner durch ein Verfahren zum Betreiben eines erfindungsgemäßen Steuerungssystems gemäß dem nebengeordneten Verfahrensanspruch gelöst. In den abhängigen Ansprüchen sind vorteilhafte Weiterbildungen des Verfahrens angegeben.

Ein Steuerungssystem umfasst verfahrensgemäß eine erste und eine zweite Steuerungseinrichtung innerhalb eines Automatisierungsnetzwerks, wobei zur Verfahrensdurchführung eine der beiden Steuerungseinrichtungen als Primärsteuerung und die andere als Reservesteuerung ausgewählt worden ist.

Das Verfahren zum Bereiben eines zuvor beschriebenen redundanten Steuerungssystems ist durch folgende Schritte gekennzeichnet:
a) zyklisches Überprüfen durch die Reservesteuerung, ob eine direkte Kommunikation zur Primärsteuerung über eine Punkt-zu-Punkt Verbindungseinrichtung besteht;
b) Initiieren durch die Reservesteuerung, einer alternativen Kommunikation zur Primärsteuerung über das Automatisierungsnetzwerk, unter der Bedingung, dass keine direkte Kommunikation über die Punkt-zu-Punkt Verbindungseinrichtung besteht;
c) Überprüfen durch die Primärsteuerung, ob eine alternative Kommunikation erfolgreich aufgebaut wurde;
d) Übernehmen der Aufgaben der Primärsteuerung durch die Reservesteuerung, unter der Bedingung, dass die alternative Kommunikation nicht erfolgreich aufgebaut wurde.

Mit der direkten Kommunikation kann eine Synchronisierung zwischen der Primärsteuerung und der Sekundärsteuerung durchgeführt werden.

Sofern eine alternative Kommunikation besteht, kann zumindest teilweise eine Synchronisierung zwischen der Primärsteuerung und der Sekundärsteuerung als Bestandteil der alternativen Kommunikation über das Automatisierungsnetzwerk durchgeführt werden.

Während der zumindest teilweisen Synchronisierung kann überprüft werden, ob die alternative Kommunikation über das Automatisierungsnetzwerk weiterhin besteht.

Die Aufgaben der Primärsteuerung können durch die Reservesteuerung übernommen werden, unter der Bedingung, dass die alternative Kommunikation unterbrochen worden ist.

Durch die Reservesteuerung kann vorteilhafter Weise eine erste Fehlermeldung generiert werden, sofern keine direkte Kommunikation über die Punkt-zu-Punkt Verbindungseinrichtung besteht.

Ferner kann durch die Reservesteuerung eine zweite Fehlermeldung generiert werden, sofern keine alternativen Kommunikation über das Automatisierungsnetzwerk besteht.

Die Erfindung wird nachfolgend anhand von beispielhaften Ausführungsformen unter Bezugnahme der beiden beigefügten Zeichnungen detailliert beschrieben. In den Zeichnungen zeigen:
Fig. 1 ein redundantes Steuerungssystem gemäß der vorliegenden Erfindung,
Fig. 2 ein Ablaufdiagramm eines Verfahrens zum Betreiben eines redundanten Steuerungssystems.

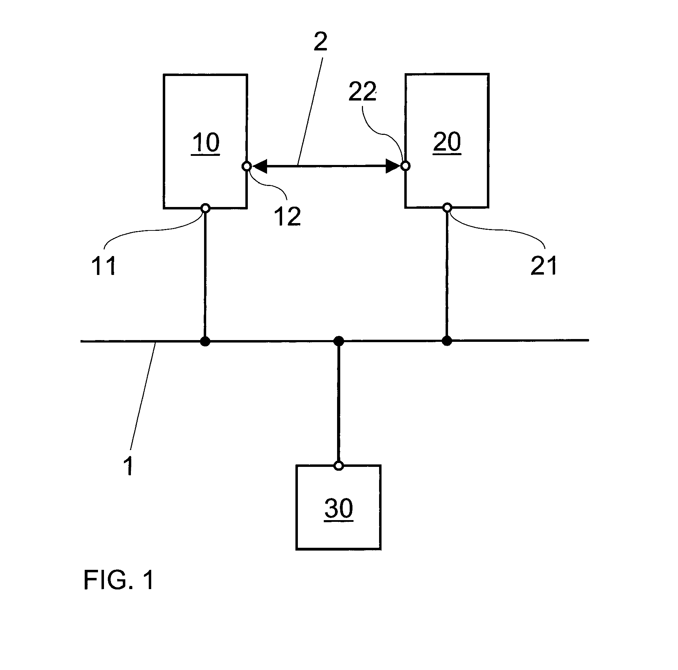

Die Figur 1 zeigt ein erfindungsgemäßes redundantes Steuerungssystem. Ein Automatisierungsnetzwerk ist zum Beispiel als PROFINET Netzwerk 1 realisiert. An dem PROFINET Netzwerk sind eine erste Steuerungseinrichtung 10 und eine zweite Steuerungseinrichtung 20 jeweils über eine PROFINET IO Controller Schnittstelle 11 bzw. 21 angeschlossen. Ferner ist an dem Netzwerk eine Anzahl von Ein- und Ausgabegeräten (E/A-Geräte) angeschlossen, von denen exemplarische ein E/A-Gerät 30 dargestellt ist. Die Steuerungseinrichtungen 10 und 20 sind zur redundanten Steuerung einer Anlage bzw. eines Prozesses vorgesehen.

Zur Synchronisation der beiden Steuerungseinrichtungen 10 und 20 wird eine Ethernet-basierte Kommunikation eingesetzt die typischerweise als Punk-zu-Punkt Verbindungseinrichtung 2 zwischen den beiden Synchronisationsschnittstellen 12 und 21 beispielsweise in Lichtwellenleitertechnik (LWL) sein kann. Alternativ kann die Verbindungseinrichtung auch als elektrische Verbindung ausgeführt sein.

Die beiden redundanten Steuerungseinrichtungen 10 und 20 sind als Primärsteuerung PRIMARY und als Reservesteuerung BACKUP konfigurierbar. Die Zuordnung PRIMARY und BACKUP kann wechseln, während eine Zuordnung als erste bzw. zweite Steuerungseinrichtung 10 und 20 über die Laufzeit konstant bleibt. Bei einer bestehenden Synchronisationsverbindung, können die Rollen als Primärsteuerung und als Reservesteuerung zwischen den beiden Steuerungseinrichtungen direkt ausgehandelt werden.

Die Kommunikation zu dem E/A-Geräten 30 bzw. zu weiteren nicht dargestellten Teilnehmern in dem PROFINET Netzwerk 1 erfolgt über das Ethernet-basierte PROFINET Protokoll. Dabei hat jede der beiden Steuerungseinrichtungen 10 und 20 im normalen Betrieb eine Kommunikationsverbindung zu dem E/A-Gerät bzw. zu jedem der weiteren Teilnehmer aufgebaut.

Über die Verbindungseinrichtung 2 wird die Synchronisation der eigentlichen Anwenderprogramme, d.h. der Abgleich der Prozessabbilder bzw. aller Steuerungssystemzustände beider Steuerungseinrichtungen durchgeführt. Des Weitern wird ein sogenanntes Link-Monitoring Protokoll verwendet, um Informationen über die Funktionsfähigkeit zwischen den beiden Steuerungseinrichtungen 10 und 20 auszutauschen.

Auf dieser Basis wird gewährleistet, dass die Steuerungen in definierten Zuständen zueinander arbeiten und sich dazu automatisch abgleichen können.

Durch eine entsprechende Konfiguration der PROFINET IO Controller Schnittstellen 11 bzw. 21 kann gewährleistet werden, dass beide Steuerungseinrichtungen 10 und 20 im gleichen Subnetz des PROFINET Netzwerks liegen. Somit ist auch eine direkte Ethernet-Kommunikation zwischen den beiden PROFINET IO Controller Schnittstellen möglich.

Da sowohl die Kommunikation zur Synchronisation als auch zum Datenaustausch mit dem E/A-Gerät 30 über ein Ethernetbasiertes Verbindung ausgeführt sind, kann durch das in der Figur 1 dargestellte redundante Steuerungssystem eine redundante Verbindung für die Synchronisation bereitgestellt werden, ohne dass eine zusätzliche Hardware erforderlich ist.

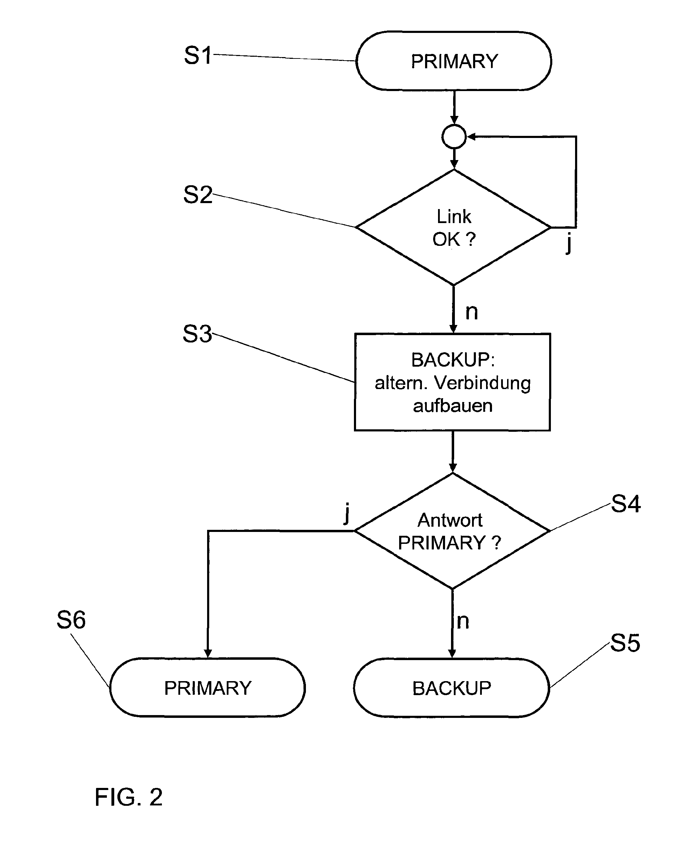

In dem Ablaufdiagramm gemäß Figur 2 ist ein Verfahren zum Betrieb eines erfindungsgemäßen Steuerungssystems in einem Beispiel dargestellt.

Wie der Schritt S1 in der Figur 2 verdeutlicht, steuert in einem normalen Betrieb die als Primärsteuerung PRIMARY ausgewählte Steuerungseinrichtung das E/A-Gerät bzw. die weiteren Teilnehmer in PROFINET Netzwerk an. Eine Anlage bzw. ein Prozess wird von der Primärsteuerung PRIMARY gesteuert, während die Reservesteuerung BACKUP von den Teilnehmern die Prozessdaten lediglich passiv verarbeitet. Die Systemzustände bzw. Prozessabbilder beider Steuerungseinrichtung werden kontinuierlich synchronisiert.

Gemäß Schritt S2 wird durch die Reservesteuerung BACKUP zyklisch überprüft, ob eine Synchronisationsverbindung zur Primärsteuerung PRIMARY besteht. Wird mit Hilfe des Link-Monitoring Protokolls erkannt, dass keine Daten mehr über die Synchronisationsschnittstelle 12 oder 22 bzw. über die Verbindungseinrichtung 2 ausgetauscht werden, versucht die Reservesteuerung BACKUP gemäß dem als S3 bezeichneten Schritt eine Verbindung über das PROFINET Netzwerk 1 zu der als Primärsteuerung PRIMARY ausgewählten Steuerungseinrichtung aufzubauen.

Der Aufbau der alternativen Verbindung zur Primärsteuerung PRIMARY wird gemäß Schritt S4 von der Reservesteuerung BACKUP überwacht, indem sie beispielsweise auf eine Antwort innerhalb eines definierten Zeitfensters erwartet.

Ist ein alternativer Verbindungsaufbau nicht möglich, liegt tatsächlich ein Ausfall der Primärsteuerung PRIMARY vor und die als Reservesteuerung BACKUP ausgewählte Steuerungseinrichtung übernimmt gemäß Schritt S5 die Steuerung des Prozesses bzw. der Anlage.

Sofern allerdings eine Kommunikationsverbindung zur der als Primärsteuerung PRIMARY ausgewählten Steuerungseinrichtung aufgebaut werden kann, liegt lediglich ein Ausfall der Synchronisationsverbindung vor. In diesem Fall wird gemäß dem Schritt S6 keine Umschaltung der Steuerungsrolle von der Primär- auf die Reservesteuerung vorgenommen, eine unerwünschte Doppelmasterschaft wird wirksam unterbunden.

Zwischen einem Ausfall der Primärsteuerung PRIMARY und einem Ausfall der Synchronisationsverbindung kann durch die Reservesteuerung wirksam unterschieden werden, so dass ein jeweiliger Ausfall signalisiert werden kann. Der jeweilige Anwender wird durch eine entsprechende Fehlermeldung in die Lage versetzt, das Problem beseitigen zu können, ohne dass der laufende Prozess unterbrochen werden muss.

Darüber hinaus ist es auch möglich, die Synchronisation des Anwenderprogramms bzw. des Prozessabbildes über das PROFINET Netzwerk weiter zu führen. Damit ist nicht nur die Fortführung der Steuerung eines Prozesses bzw. einer Anlage gewährleistet, sondern auch der Redundanzbetrieb kann weiter aufrecht erhalten werden.

Die Synchronisation kann allerdings in der Regel nur eingeschränkt erfolgen, da über das Profinet Netzwerk neben der Synchronisation auch die Kommunikation mit dem E/A-Gerät 30 und den weiteren Teilnehmern erfolgt. Somit ist die für die Synchronisation verfügbare Bandbreite geringer, als im normalen Betrieb, bei dem die erste und die zweite Steuerungseinrichtungen 10 und 20 über die Punkt-zu-Punkt Verbindungseinrichtung 2 synchronisiert werden.

## Patentansprüche

1. Redundantes Steuerungssystem umfassend ein Automatisierungsnetzwerk (1) mit einer ersten Steuerungseinrichtung (10) und einer zweiten Steuerungseinrichtung (20), wobei die erste und die zweite Steuerungseinrichtung (10, 20) jeweils über eine Netzwerkschnittstelle (11, 21) zum Datenaustausch mit dem Automatisierungsnetzwerk (1) verbunden sind und wobei die erste und zweite Steuerungseinrichtung (10, 20) für eine direkte Kommunikation untereinander über eine Punkt-zu-Punkt Verbindungseinrichtung (2) miteinander verbunden sind,
**dadurch gekennzeichnet, dass** die erste und die zweite Steuerungseinrichtung (10, 20) dazu ausgebildet sind, untereinander eine alternative Kommunikation über das Automatisierungsnetzwerk (1) aufzubauen, sofern die direkte Kommunikation über die Punkt-zu-Punkt Verbindungseinrichtung (2) nicht verfügbar ist.

2. Redundantes Steuerungssystem gemäß vorstehendem Anspruch, **dadurch gekennzeichnet, dass** die direkte Kommunikation eine Synchronisation zwischen der ersten und der zweiten Steuerungseinrichtung umfasst.

3. Redundantes Steuerungssystem gemäß einem der vorstehenden Ansprüche, **dadurch gekennzeichnet, dass** die alternative Kommunikation zumindest eine teilweise Synchronisation zwischen der ersten und der zweiten Steuerungseinrichtung umfasst.

4. Redundantes Steuerungssystem gemäß einem der vorstehenden Ansprüche, **dadurch gekennzeichnet, dass** die erste oder die zweite Steuerungseinrichtung als Primärsteuerung ausgewählt ist, wobei die andere Steuerungseinrichtung als Reservesteuerung ausgewählt ist.

5. Redundantes Steuerungssystem gemäß vorstehendem Anspruch, **dadurch gekennzeichnet, dass** die erste und die zweite Steuerungseinrichtung ausgebildet sind, die Auswahl als Primärsteuerung und als Reservesteuerung selbständig untereinander auszuhandeln.

6. Redundantes Steuerungssystem gemäß einem der beiden vorstehenden Ansprüche, **dadurch gekennzeichnet, dass** die Reservesteuerung ausgebildet ist, die direkte Kommunikation mit der Primärsteuerung zyklisch zu überprüfen.

7. Redundantes Steuerungssystem gemäß vorstehendem Anspruch, **dadurch gekennzeichnet, dass** die Reservesteuerung ausgebildet ist, die Aufgaben der Primärsteuerung zu übernehmen, sofern die alternative Kommunikation über das Automatisierungsnetzwerk nicht verfügbar ist.

8. Verfahren zum Bereiben eines redundanten Steuerungssystems mit einer ersten und einer zweiten Steuerungseinrichtung (10 20) in einem Automatisierungsnetzwerk (1), wobei eine der beiden Steuerungseinrichtungen als Primärsteuerung und die andere als Reservesteuerung ausgewählt worden ist, gemäß einem der vorstehenden Ansprüche, **gekennzeichnet durch** folgende Schritte:
a) zyklisches Überprüfen **durch** die Reservesteuerung, ob eine direkte Kommunikation zur Primärsteuerung über eine Punkt-zu-Pünkt Verbindungseinrichtung (2) besteht;
b) Initiieren **durch** die Reservesteuerung, einer alternativen Kommunikation zur Primärsteuerung über das Automatisierungsnetzwerk (1), unter der Bedingung, dass keine direkte Kommunikation über die Punkt-zu-Punkt Verbindungseinrichtung (2) besteht;
c) Überprüfen **durch** die Primärsteuerung, ob eine alternative Kommunikation erfolgreich aufgebaut wurde;
d) Übernehmen der Aufgaben der Primärsteuerung **durch** die Reservesteuerung, unter der Bedingung, dass die alternative Kommunikation nicht erfolgreich aufgebaut wurde.

9. Verfahren gemäß dem vorhergehenden Anspruch, **dadurch gekennzeichnet, dass** über die direkte Kommunikation eine Synchronisierung zwischen der Primärsteuerung und der Sekundärsteuerung durchgeführt wird.

10. Verfahren gemäß einem der vorhergehenden Ansprüche 8 oder 9, **dadurch gekennzeichnet, dass,** sofern eine alternative Kommunikation besteht, zumindest teilweise eine Synchronisierung zwischen der Primärsteuerung und der Sekundärsteuerung als Bestandteil der alternativen Kommunikation über das Automatisierungsnetzwerk durchgeführt wird.

11. Verfahren gemäß dem vorhergehenden Anspruch, **dadurch gekennzeichnet, dass** während der zumindest teilweisen Synchronisierung überprüft wird, ob die alternative Kommunikation über das Automatisierungsnetzwerk weiterhin besteht.

12. Verfahren gemäß dem vorhergehenden Anspruch, **dadurch gekennzeichnet, dass** die Aufgaben der Primärsteuerung durch die Reservesteuerung übernommen werden, unter der Bedingung, dass die alternative Kommunikation unterbrochen worden ist.

13. Verfahren gemäß einem der vorhergehenden Ansprüche 8 bis 12, **dadurch gekennzeichnet, dass** durch die Reservesteuerung eine erste Fehlermeldung generiert wird, sofern keine direkte Kommunikation über die Punkt-zu-Punkt Verbindungseinrichtung (2) besteht.

14. Verfahren gemäß einem der vorhergehenden Ansprüche 8 bis 13, **dadurch gekennzeichnet, dass** durch die Reservesteuerung eine zweite Fehlermeldung generiert wird, sofern keine alternativen Kommunikation über das Automatisierungsnetzwerk (1) besteht.
